# EUROPEAN PATENT APPLICATION

(11) **EP 1 555 187 A2**
(43) Date of publication of application: **20.07.2005**
(21) Application number: 05000628.7
(22) Date of filing: 13.01.2005
(51) Int. Cl.: B62D 1/19

(54) **Steering support structure and vehicle provided therewith**

(30) Priority: 14.01.2004 JP 2004006437; 20.01.2004 JP 2004011425; 21.01.2004 JP 2004012693
(71) Applicant: Mazda Motor Corporation, Aki-gun, Hiroshima 730-8670 (JP)
(72) Inventor: Hori, Tomohiro, Aki-gun Hiroshima 730-8670 (JP); Taguchi, Tomoo, Aki-gun Hiroshima 730-8670 (JP); Tabuchi, Osamu, Aki-gun Hiroshima 730-8670 (JP)
(74) Representative: Müller-Boré & Partner Patentanwälte

(57) **Abstract**

There is provided the steering support structure for the vehicle, comprising the dash panel **(6)** provided at the front portion in the cabin **(5)** where the driver seat **(1)** for the passenger **(A)** is provided, the steering support member **(13)** provided behind the dash panel **(6)** and extending in the vehicle width direction, the steering shaft **(14)** supported by the steering support member **(13)** the steering device **(26)** coupled to the front end portion of the steering shaft **(14)**, the steering wheel **(27)** attached to the rear end portion of the steering shaft **(14)**, wherein the steering wheel **(27)** is provided so as to face the shoulder portion of the passenger **(A)** on the driver seat **(1)**, and the steering shaft **(14)** is provided above the steering support member **(13)** and attached to the steering support member **(13)**.

## Description

The present invention relates to a steering support structure for a vehicle in which a steering shaft, whose front end portion is coupled to a steering device and whose rear end portion is attached to a steering wheel, is supported at a steering support member extending in a vehicle width direction, and to a ehicle provided therewith.

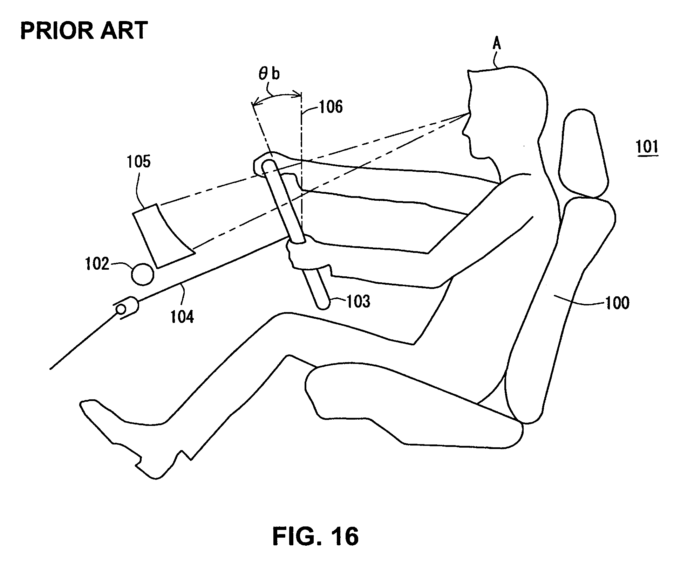

Conventionally, a structure illustrated in FIG. **16** is known as such a steering support structure of a vehicle. Namely, there is provided a steering support structure of a vehicle, comprising a dash panel provided at a front portion in a cabin **101** where a driver seat **100** for a passenger **A** is provided, a steering support member **102** provided behind the dash panel and extending in the vehicle width direction, and a steering shaft **104**, whose front end portion is coupled to a steering device and whose rear end portion is attached to a steering wheel **103**, wherein the steering shaft **104** is provided below the steering support member **102** and attached to the steering support member **102**.

Also, the steering wheel **103** is provided so as to incline relative to a vertical line **106** by an angle θ**b** (e.g., approximately 23 degrees) in order to place a meter **105** at an instrument panel and provide a proper visibility for the passenger.

This conventional steering support structure of a vehicle has a proper meter visibility, but has the following problems. Namely, since the steering wheel **103** inclines forward by the angle θ**b**, there was a problem that a sufficient adjustment of the steering wheel **103** cannot be obtained in a longitudinal direction of the vehicle according to a body size of the passenger. Further, a distance from a driver's hand located at an upper portion of the steering wheel **103** to the driver's shoulder portion is relatively long, whereas a distance from a driver's hand located at a lower portion of the steering wheel **103** to the driver's shoulder portion is relatively short. Thus, the difference between the above-described distances is relatively large. As a result, a handling of the steering wheel **103** deteriorates and a sense of fatigue of the passenger **A** deteriorates as well.

Meanwhile, the Japanese Patent Laid-Open Publication No. 7-52809 discloses that a steering shaft is supported at a lower portion of a steering support member extending in the vehicle width direction via a steering hanger, and a steering wheel attached to a rear end of the steering shaft is inclined forward. This steering support structure, however, is substantially the same as the one illustrated in FIG. **16**, and thus it had the same problems.

The present invention has been devised in view of the above-described problems. An object of the present invention is to improve the steerig wheel operability.

This object is solved by a steering support structure for a vehicle according to the present invention of claim 1 and by a vehicle according to claim 18. Preferred embodiments of the present invention are subject of the dependent claims.

Accordingly, there is provided a steering support structure for a vehicle and a vehicle provided therewith in which the difference between the distance from the driver's hand located at the upper portion of the steering wheel to the driver's shoulder portion and the distance from the driver's hand located at the lower portion of the steering wheel to the driver's shoulder portion becomes extremely small, and thus the handling of the steering wheel can be improved, the sense of fatigue of the passenger can be reduced, and/or the steering wheel can be properly adjusted in the longitudinal direction of the vehicle in particular according to the body size of the passenger, so that overall operability of the driving wheel is improved.

According to the present invention, there is provided a steering support structure for a vehicle, in particular having a dash panel provided at a front portion in a cabin where a seat for a passenger is provided, the steering support structure comprising a steering support member provided behind a dash panel and extending substantially in a vehicle width direction, a steering shaft supported by the steering support member, a steering device coupled to a front end portion of the steering shaft, a steering wheel attached to a rear end portion of the steering shaft, wherein the steering wheel is provided so as to substantially face a shoulder portion of the passenger on the seat, and the steering shaft is provided above the steering support member and attached to the steering support member.

Accordingly, since the steering wheel is provided so as to substantially face the shoulder portion of the passenger, the difference between the distance from the driver's hand located at the upper portion of the steering wheel to the driver's shoulder portion and the distance from the driver's hand located at the lower portion of the steering wheel to the driver's shoulder portion becomes extremely small. As a result, the handling of the steering wheel can be improved, the sense of fatigue of the passenger can be reduced, and/or the steering wheel can be properly adjusted in the longitudinal direction of the vehicle in particular according to the body size of the passenger. Namely, the proper disposition of the steering wheel with the reduced sense of fatigue can be attained.

According to a preferred embodiment, the steering shaft is configured such that a position thereof is adjustable, and there is provided a meter portion which moves along with the steering shaft and whose position is adjustable. The position of the steering shaft can be adjusted in both tilt and telescopic directions.

Accordingly, since the steering shaft and the meter portion move together, both the proper disposition of the steering wheel and the proper visibility of the meter can be obtained.

According to another preferred embodiment, there is provided a steering attaching bracket to attach the steering shaft to the steering support member, and the steering shaft is fixed to the steering support member by fastening the steering attaching bracket preferably substantially from below.

Accordingly, since the both (the steering shaft and the steering support member) are fixed by fastening the steering attaching bracket preferably substantially from below, the service of the steering shaft can be facilitated.

According to another preferred embodiment, there is provided an instrument panel above the steering shaft, and the instrument panel is configured such that a part thereof is detachable, whereby the steering shaft can be detached by detaching the part of the instrument panel.

Accordingly, all of the instrument panel does not need to be detached, and by detaching only part, the steering shaft can be removed. Accordingly, the maintenance and service can be facilitated.

According to another preferred embodiment, this part of the instrument panel is provided at the meter portion.

Accordingly, all of the instrument panel does not need to be detached, and by detaching only the meter portion, the steering shaft can be removed. Accordingly, the maintenance and service can be facilitated. Also, this detachable structure of the meter portion can simplify a structure around the instrument panel. Further, since there is provided no unnecessary slit structure, an appearance will not deteriorate.

According to another preferred embodiment, the meter portion comprises a meter body and a meter hood which are integrally or unitarily attached.

Accordingly, since the meter body and the meter hood are integrally or unitarily attached or detached, the maintenance and service can be further facilitated.

According to another preferred embodiment, there is further provided an operating member which pulls rearward or engages an intermediate portion of the steering shaft during a vehicle frontal crash or the like.

Accordingly, since the operating member pulls the intermediate portion of the steering shaft rearward during the vehicle frontal crash or the like, the safety of the passenger can be ensured by the control of the steering shaft.

Namely, both the proper disposition of the steering wheel, which provides the steering wheel with the proper longitudinal adjustment and the reduced sense of fatigue, and the safety of the passenger by the control of the steering shaft can be obtained.

According to another preferred embodiment, the steering shaft comprises a plurality of shafts which are coupled via a joint portion, the operating member pulls or engages the steering shaft such that the steering shaft is bent substantially rearward during the vehicle frontal crash. The joint portion may be configured of a steering joint such as an universal joint.

Accordingly, when the steering shaft is pulled rearward or engaged by the operating member during the vehicle frontal crash, the pull or engagement is carried out by making use of the joint portion. Thus, the safety by the control of the steering shaft can be ensured further properly.

According to another preferred embodiment, the operating member is attached at the dash panel which is moved rearward during the vehicle frontal crash.

Accordingly, since the operating member is or is to be attached at the dash panel which is moved rearward first during the vehicle frontal crash or the like, the steering shaft can be pulled rearward at the appropriate timing.

According to another preferred embodiment, the operating member is or is to be attached to a pedal support bracket which is attached at the dash panel to support the pedal and is moved rearward and then slant downward during vehicle frontal crash or the like. This pedal support bracket is configured so as to be a structure to prevent the pedal from being moved rearward.

Accordingly, since the pedal support bracket, which is moved substantially rearward and then slant downward during vehicle frontal crash or the like, is utilized, the steering shaft can be pulled rearward or engaged surely without interfering with any other member when the operating member pulls the steering shaft. Also, this structure can be made simple.

According to another preferred embodiment, there is further provided an engaging member which prevents the operating member from sliding at a portion of the steering shaft which corresponds to the operating member.

Accordingly, since the operating member is prevented from sliding by the engaging member, the pull or engagement of the steering shaft by the operating member can be attained further surely.

According to another preferred embodiment, there is further provided an expanding portion which is expandable in an axial direction during the vehicle frontal crash or the like at the intermediate portion of the steering shaft.

Accordingly, the expanding portion provided at the intermediate portion of the steering shaft expands in the axial direction during the vehicle frontal direction. Thus, the steering wheel can be prevented from moving toward the passenger, and thus the safety by the control of the steering shaft can be ensured.

According to another preferred embodiment, the intermediate portion of the steering shaft comprises a plurality of shafts which are connected with an overlap or telescopically. These shafts may be configured of an outer shaft and an inner shaft which can covey the steering force by the steering wheel and move relatively in the axial direction.

Accordingly, the expanding portion which is expandable at least in the axial direction during the vehicle frontal crash or the like can be made simple.

According to another preferred embodiment, this expanding portion is configured so as to be separated after its expansion.

Accordingly, since the expanding portion is separated after its expansion, the control of the steering shaft can be attained further surely, and the safety of the passenger can be ensured further properly.

According to another preferred embodiment, there is further provided an operating member to promote the expansion and separation of the expanding portion by pulling rearward or engaging the intermediate portion of the steering shaft during the vehicle frontal crash or the like. The operating member may be configured of a hook member which pulls the intermediate portion of the steering shaft rearward.

Accordingly, since the expansion and separation of the expanding portion is promoted by the operating member, the expansion and separation can be attained surely.

According to the invention, there is further provided a vehicle provided with a steering support structure according to the invention or a preferred embodiment thereof.

Other features, aspects and advantages of the present invention will become apparent from the following description which refers to the accompanying drawings.

FIG. **1** is a side view illustrating a structure of passenger's shoulder facing a steering wheel.

FIG. **2** is a side view illustrating a steering support structure of a vehicle according to the present invention.

FIG. **3** is a schematic diagram illustrating the steering support structure.

FIG. **4** is a perspective view illustrating a column support structure comprising a steering attaching bracket.

FIG. **5** is an enlarged side view illustrating a structure of a meter portion which moves along with a steering shaft.

FIG. **6** is a plan view of a major part illustrating the steering support structure.

FIG. **7** is a plan view of FIG. **6**.

FIG. **8** is an exploded perspective view illustrating a structure in which the steering shaft is pulled rearward.

FIG. **9** is a perspective view illustrating an attaching structure of a pedal control bracket and a backup bracket .

FIG. **10** is a sectional view of a second steering shaft.

FIG. **11A**, **11B** and **11C** are sectional views illustrating respective structures of the second steering shaft which can expand and separate.

FIG. **12** is a schematic diagram explaining an operation during a vehicle crash.

FIG. **13** is a side view illustrating a state where the steering shaft is pulled rearward during the vehicle crash.

FIG. **14** is a side view illustrating a separated state of the second steering shaft.

FIG. **15** is a side view illustrating a steering support of a vehicle according to another embodiment of the present invention.

FIG. **16** is a side view schematically illustrating a conventional steering support shaft of a vehicle.

Hereinafter, preferred embodiments will be described in detail referring to the accompanying drawings. It should be understood that even though embodiments are separately described, single features thereof may be combined to additional embodiments.

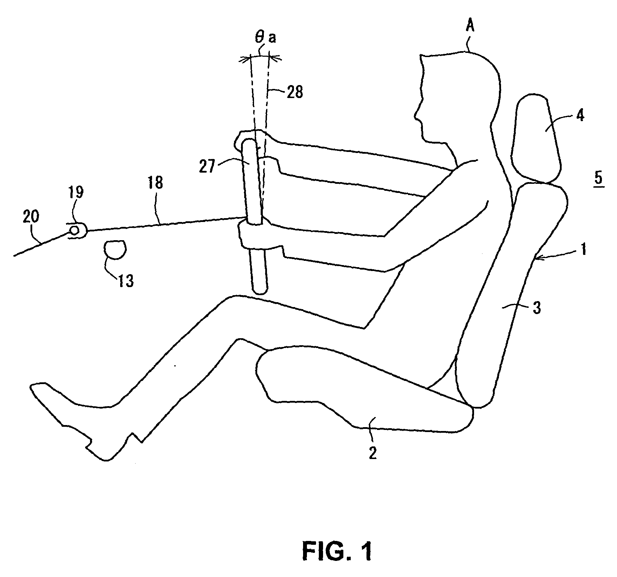

Figures illustrate a steering support structure of a vehicle, and there is provided a driver seat **1** as a seat on which a driver or passenger **A** sits in FIGS. **1** through **3**. The driver seat **1** comprises a seat cushion **2**, a seat back **3**, and a headrest **4**.

There is provided a dash lower panel **6** at a front portion of a cabin or passenger compartment **5** in which the driver seat **1** and a passenger seat (not illustrated) are provided. The dash lower panel **6** separates the cabin from an engine room **7** in a longitudinal direction of the vehicle. A cowl box **8,** which has a closed-section structure extending substantially in a vehicle width direction, is or is to be attached to an upper portion of the dash lower panel **6**. The cowl box **8** is a vehicle-body rigidity member, which comprises a cowl panel **9** and a dash upper panel **10** which are connected with each other to constitute a cowl closed section **11** extending substantially in the vehicle width direction.

Also, there is provided a floor panel **12** which is connected with a lower portion of the dash lower panel **6** and extends rearward and substantially horizontally to form at least part of a floor portion. Further, in rear of the dash lower panel **6** is provided a steering support member **13** as a vehicle-body rigidity member extending or to be arranged substantially in the vehicle width direction. The steering support member **13** interconnects right-and-left hinge pillars or A posts as a vehicle-body rigidity member.

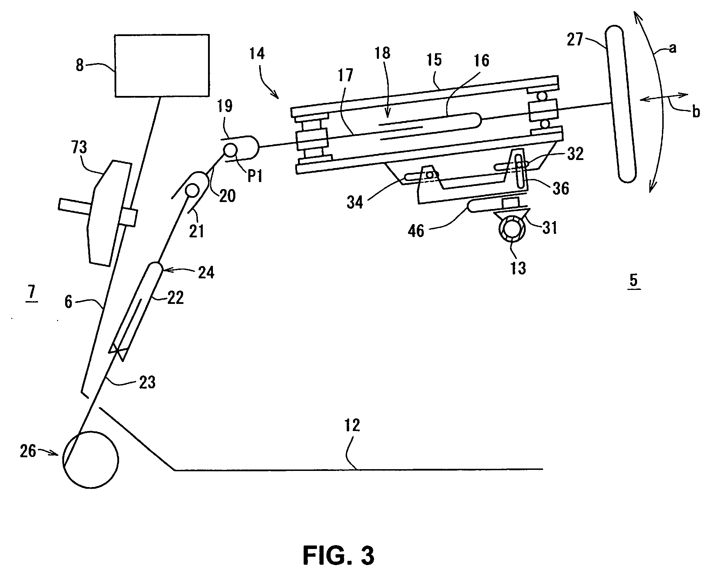

A steering shaft **14**, which is supported at the steering support member **13**, comprises the following members. Namely, as illustrated in FIG. **3**, the steering shaft **14** comprises: a first steering shaft **18** which comprises an outer shaft **16** and an inner shaft **17,** which are at least partly disposed in a steering column **15,** and is 2nd-collapsible; a second steering shaft **20** (intermediate shaft) which is or is to be coupled to a front end of the first steering shaft **18** via a universal joint **19** as a steering joint; and a third steering shaft **24** (pinion input shaft) which is or is to be coupled to a front end of the second steering shaft **20** via a universal joint **21** as the steering joint and includes an outer shaft **22** and an inner shaft **23**. Namely, the above-described steering shaft **14** comprises a plurality of shafts **18**, **20** and **24** which are coupled via the joints **19**, **21**.

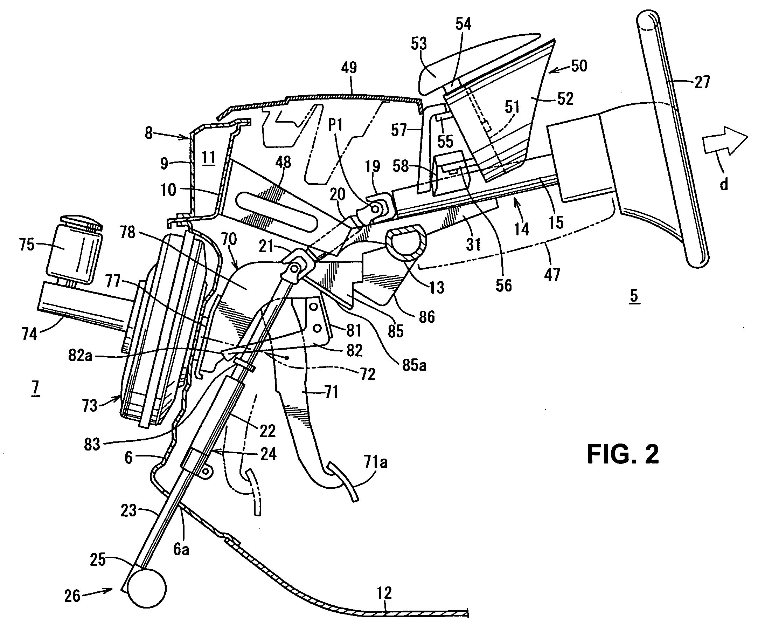

The inner shaft **23** of the third steering shaft **24** at least partly extends substantially forward or into an engine room **7** getting through an opening portion **6a** at the dash lower panel **6** as illustrated in FIG. **2**, a worm **25** at its extended end is engaged with a sector or a rack to constitute a steering gear, and right-and-left tie rods are coupled to the steering gear. Accordingly, a steering device **26** to steer right-and-left wheels is configured.

Also, a steering wheel **27**, which is attached to a rear end of the outer shaft **16** of the first steering shaft **18**, is provided so as to face a shoulder portion of the passenger **A** as illustrated in FIG. **1**.

In the present embodiment, the steering wheel **27** is inclined by an angle θ**a** (e.g., approximately 10 degree) relative to a vertical imaginary line **28** extending in a vertical direction. Further, the steering shaft **14** is supported at the steering support member **13** such that the first and second steering shafts **18** and **20** thereof are disposed above the steering support member **13**.

By arranging the steering wheel **27** so as to substantially face the shoulder portion of the passenger **A** described above, the difference between the distance from a driver's hand located at an upper portion of the steering wheel **27** to the driver's shoulder portion and the distance from a driver's hand located at a lower portion of the steering wheel **27** to the driver's shoulder portion becomes extremely small as illustrated in FIG. **1**. As a result, a handling of the steering wheel **27** can be improved, a sense of fatigue of the passenger **A** can be reduced, and the steering wheel **27** can be properly adjusted substantially in a longitudinal direction of the vehicle particularly according to a body size of the passenger **A**.

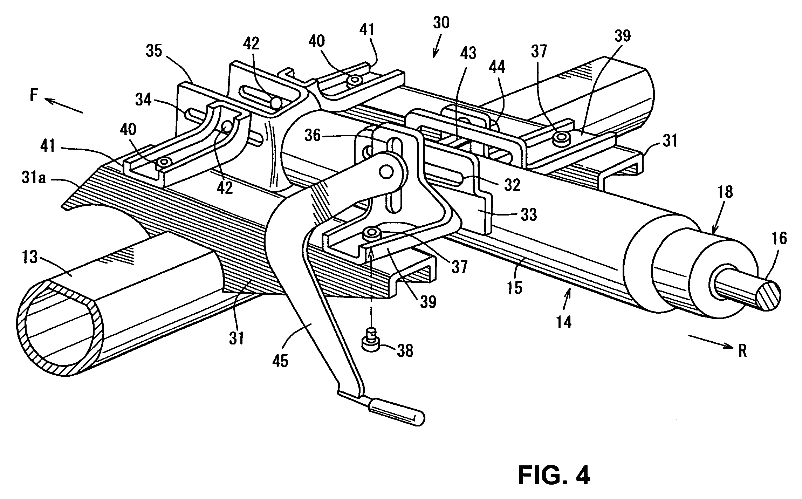

FIG. **4** illustrates a steering attaching bracket **30** fixing or for fixing the steering shaft **14** to the steering support member **13**, and the steering shaft **14** is adjustable in both a tilt direction (see an arrow **a**) and a telescopic direction or substantially the vehicle longitudinal direction (see an arrow **b**) by the steering attaching bracket **30** as illustrated in FIG. **3**.

The steering attaching bracket **30** comprises: lateral (right-and-left) support brackets **31** which are fixed (preferably welded) to both sides of the steering support member **13** and have substantially U-shaped cross section; lateral (right-and-left) brackets **33** which are directly fixed on both sides of the steering column **15** and have long holes **32** extending substantially longitudinally; a U-shaped bracket **35** which is to be fixed to a front portion of the steering column **15** and have a proper size not so as to interfere with the universal joint **19** and long holes **34** extending longitudinally; lateral (right-and-left) brackets **39** which are respectively formed substantially in a L-shape so as to extend between the support brackets **31** and the brackets **33,** have long holes **36** extending substantially vertically (or in a direction at an angle different from 0° or 180°, preferably substantially normal to the direction of the long hole 32 and/or 34) at their sides corresponding to the long holes **32,** and are respectively fastened to the support brackets **31** via nuts **37** fixed to (preferably welded at) the support brackets **31** and bolts **38** at least partly inserted from below the support bracket **31;** and lateral (right-and-left) brackets **41** which are respectively formed substantially in a L-shape so as to extend between the front portion of the support brackets **31** and the bracket **35** at the side of the steering column **15** and are respectively fastened to the support brackets **31** via nuts **40** fixed to (preferably welded at) the support brackets **31** and bolts (not illustrated) at least partly inserted from below the support bracket **31**.

Also, pins **42** are provided at sides of the brackets **41** located forward (front attaching brackets) which correspond to the long holes **34**, and the pins **42** are at least partly inserted into the long holes **34** at the bracket **35** so as to slide or move relatively thereto. Meanwhile, an axis member **43** is provided at the bracket **39** located rearward (rear attaching brackets) so as to integrally or unitarily penetrate the vertical long holes **36** and the longitudinal long holes **32** of the brackets **33**. This axis member **43** is configured so as to be fastened and unfastened (locked and unlocked) by a fastening member preferably comprising a nut **44** fixed (preferably welded) to the attaching bracket **39** and an adjusting lever **45** integrally or unitarily coupled to one end of the axis member **43**.

According to this structure, after the axis member **43** has been unfastened by the lever **45**, the steering shaft **14** (specifically, the steering column **15** and first steering shaft **18**) can be adjusted substantially along the vertical long holes **36** in the arrow **a** direction (tilt) and also along the longitudinal long holes **32** and **34** in the arrow **b** direction (telescopic) of FIG. **3**. And, after these tilt and/or telescopic adjustments has been done, the axis member **43** is or can be fastened. Thus, the steering shaft **14** and the steering wheel **27** can be adjusted in their proper positions according to the body size of the passenger **A**.

Herein, there are respectively provided substantially U-shaped plates **46** as a preferred impact absorbing member between the support brackets **31** and the attaching brackets **41** and **39** as illustrated in FIG. **3**, whose illustration is omitted in FIG. **4**.

A structure of the steering attaching bracket **30**, in which the steering shaft **14**, specifically the steering column **15** is fixed or to be fixed to the steering support member **13** by the fastening substantially from below as illustrated in FIG. **4**, can facilitate the service of the steering shaft **14**.

Also, as illustrated in FIG. **2**, a specified (predetermined or predeterminable) portion of the steering column **15** is enclosed by a column cover **47**, and there is provided a steering bracket **48** between a front-end slant portion **31a** (see FIG. **4**) and a rear face portion of the dash upper panel **10** at the cowl box **8**.

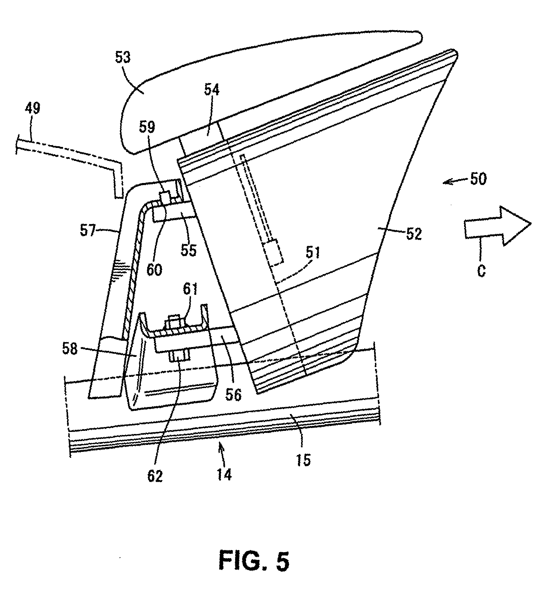

As illustrated in FIGS. **2** and **5**, an instrument panel **49** is provided substantially above the steering shaft **14**, and a meter portion **50** as a part of the instrument panel **49** is detachably provided. The meter portion **50** comprises a meter body **51** including a vehicle speed meter, an engine speed mater and so on, a meter cover **52** and a meter hood **53**. The meter cover **52** and the meter hood **53** are integrally connected by a connecting member **54**.

The meter portion **50** is configured so as to be adjustable in position by moving along with the steering column **15** of the steering shaft **14** as illustrated in FIGS. **2** and **5**. Namely, a single meter support upper **55** is provided at an intermediate portion (preferably substantially the center) of a front upper portion of the meter body **51**, and two meter support lower **56** are provided at both sides of front lower portion of the meter body **51** (only one thereof is illustrated).

Also, there are provided a single meter support bracket **57** as a center bracket extending upward from the steering column **15**, and two meter support brackets **58** as side brackets extending toward both sides from the steering column **15** (only one thereof is illustrated). These meter support brackets **57** and **58** preferably are formed so as to have a substantially U-shaped cross section to ensure a sufficient rigidity thereof.

Further, a pin **59** extending substantially upward is formed integrally or unitarily on the meter support upper **55**, and the meter support bracket **57** has a pin hole **60** to receive this pin **59** for a positional adjustment.

Also, nuts **61** are respectively welded to the meter support brackets **58**, and then the both members **58** and **56** are fastened by bolts **62** into the nuts **61**. In order to attach the meter portion **50** to the respective meter support brackets **57** and **58**, the pin **59** at the meter support upper **55** is inserted into the pin hole **60** at the meter support bracket **57** to place the meter portion **50** temporarily, and then the bolts **62** are at least partly inserted into the nuts **61** via the meter support lower **56** substantially from below and fastened into the nuts **61** of the meter support brackets **58**. Thus, the meter portion **50** can be attached.

In order to detach the meter portion **50**, after the column cover **47** (see FIG. **2**) has been detached, the bolts **62** are took off and the pin **59** is took off substantially downward, and then the meter hood **53**, meter body **51** and meter cover **52** are pulled rearward (in an arrow direction **c** of FIG. **5**) together. Thus, the meter portion **50** can be detached from the steering column **51** and the instrument panel **49**.

Thus, since the steering shaft **14** and the meter portion **50** move together, both the proper disposition of the steering wheel **27** and the proper visibility of the meter can be obtained. Also, all of the instrument panel **49** does not need to be detached, and by detaching only the meter portion **50**, the steering shaft **14** can be removed, thereby facilitating the maintenance and service. When the steering shaft **14** is detached, the engagement of the steering gear is once released, and after the bolts **38** are or can be took off substantially downward illustrated in FIG. **4**, the steering shaft **14** is removed in an arrow direction **d** of FIG. **2**.

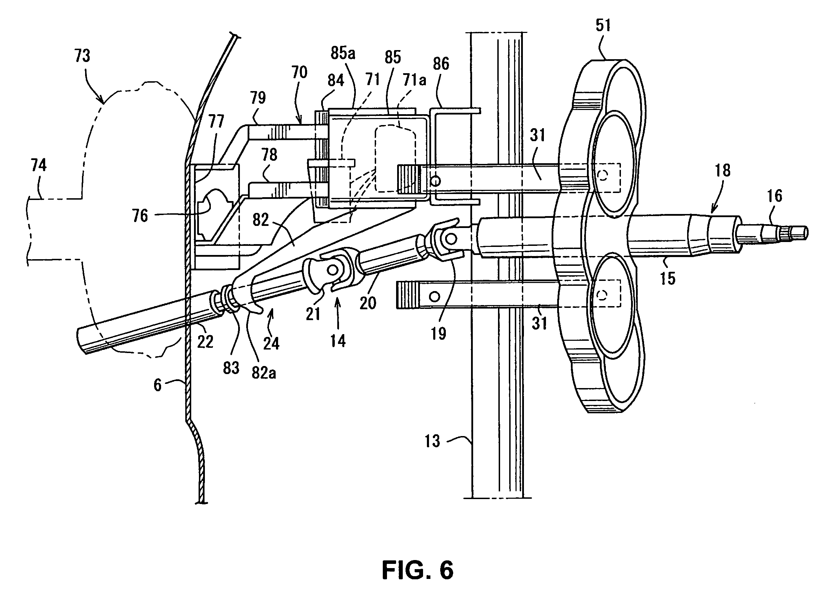

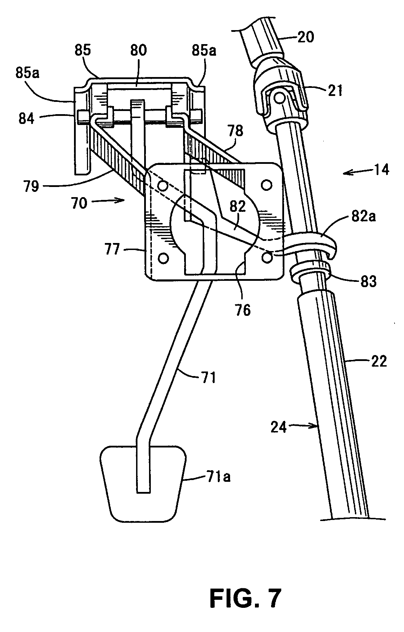

As illustrated in a side view of FIG. **2**, a plan view of FIG. **6**, and an elevation view of FIG. **7**, a brake pedal **71** is rotatably supported at a pedal support bracket **70** which is or is to be attached to the dash lower panel **6**. And, a valve operating rod **72** (illustrated by a two-dotted broken line) is coupled to the brake pedal **71**, and a braking device **73** provided at the engine room **7** is operated via the valve operating rod **72** by pressing a pressing face **71a** of the brake pedal **71**.

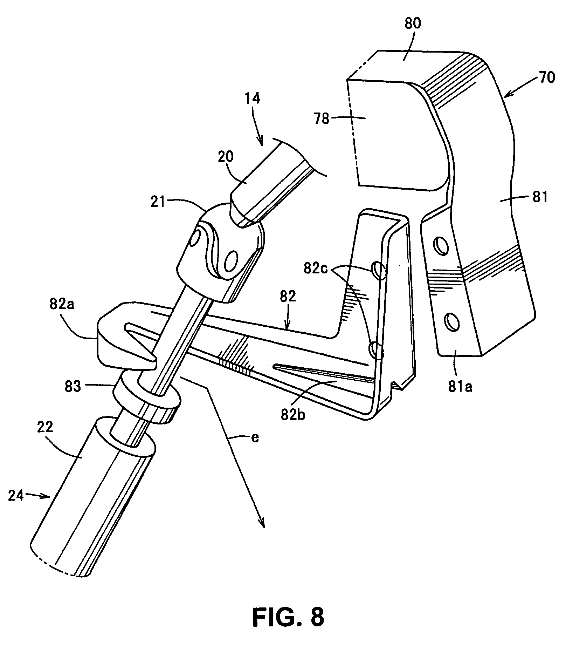

The above-described braking device **73** comprises a master cylinder **74** and a fluid reservoir **75**, and a body thereof is attached to a front face of the dash lower panel **6**. The pedal support bracket **70**, as illustrated in FIGS. **2**, **6**, **7** and **8**, is comprised of a front face plate **77** which has an opening **76** for allowing the valve operating rod **72** to get therethrough toward the brake pedal **71,** lateral (right-and-left) side face plates **78** and **79,** an upper face plate **80** and a back face plate **81** which respectively interconnect the right-and-left side face plates **78** and **79.** A bent portion **81** a is formed integrally with the back face plate **81** of the pedal support bracket **70** as illustrated in FIG. **8,** and a hook member **82** substantially having a L-shape, when viewed from the side, is attached to the bent portion **81a**. The hook member **82** is a member to promote the expansion and separation of an expanding portion by moving rearward the center portion of the steering shaft **14**, which will be described.

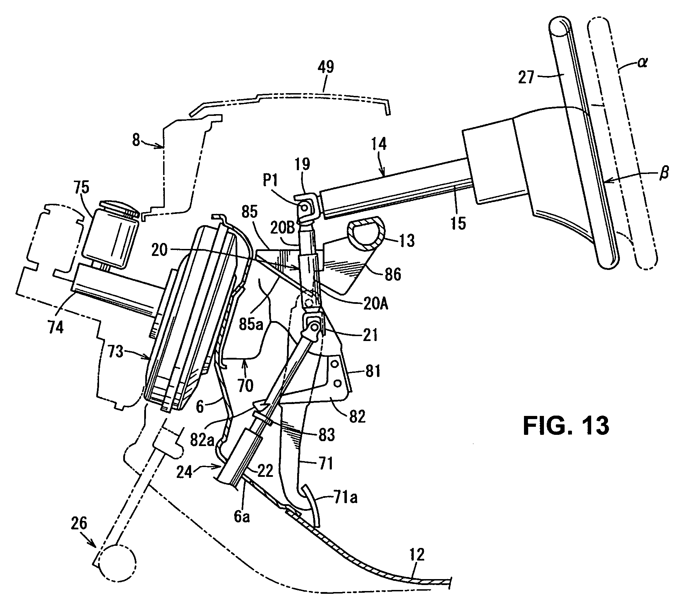

The hook member **82** includes a hook portion **82a** having a hook shape at its front end, and, as illustrated in FIGS. **2**, **6**, **7** and **8**, it is disposed such that the hook portion **82a** is away from the outer shaft **22** of the third steering shaft **24** but can engage with the shaft **24** in a specified (predetermined or predeterminable) situation. Namely, when the vehicle has a frontal crash or the like, the hook member **82** functions as an operating member to pull the steering shaft **14** rearward by engaging the outer shaft **22** (see, particularly, the second and third steering shafts **20** and **24**) (see FIG. **13**).

The hook member **82** as the operating member includes a bead **82b** to increase the rigidity of the member, and bolt holes **82c** and **82c** are formed at the attaching portion of the bracket **70**.

At a specified portion of the outer shaft **22** below the hook portion **82a** is provided an engaging ring **83** as an engaging member which prevents the hook member **82** from sliding and ensures the pull of the steering shaft **14** by the hook member **82**.

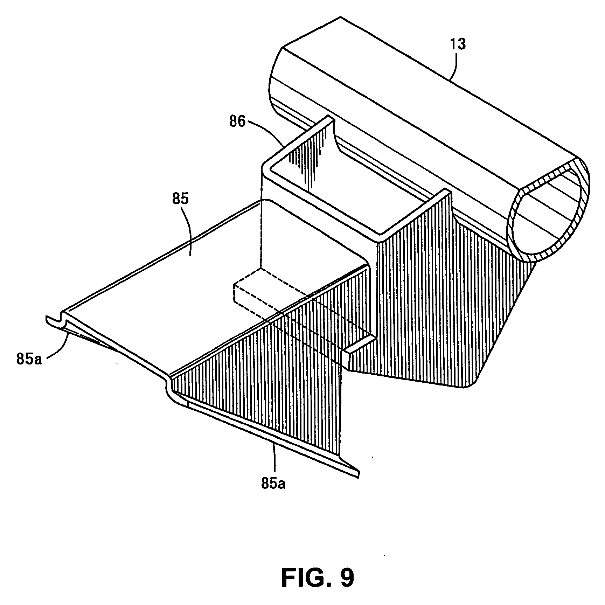

Also, an axis member **84** is fixed between the right-and-left side face plates **78** and **79** of the pedal support bracket **70** as illustrated in FIGS. **6** and **7**. Further, a pedal control bracket **85** preferably substantially having a box shape opening substantially downward is provided at an upper and rear portion of the pedal support bracket **70** (see FIG. **9**), and a backup bracket **86** having a U shape is attached between the pedal control bracket 85 and the steering support member **13**. Both brackets **85** and **86** are connected with each other by a bolt-and-nut or welding. Thus, the both brackets **85** and **86** (as preferred rigidity members) are configured so as substantially not to change their positions during the vehicle frontal crash or the like.

Also, lateral (right-and-left) guide pieces **85a** and **85a** which slant rearward and downward are formed integrally or unitarily with lower ends of the pedal control bracket **85** as illustrated in FIGS. **2**, **6**, **7**, and **9**. When the dash lower panel **6** and the pedal support bracket **70** are moved substantially rearward during the vehicle frontal crash or the like, the axis member **84** of the pedal support bracket **70** is guided along lower faces of the above-described guide pieces **85a** and **85a**, and the pedal support bracket **70** is bent as illustrated in FIG. **13**. Thus, the brake pedal **71** is prevented from jumping up toward the feet of the passenger **A**. Also, the hook member **82** attached to the pedal support bracket **70** is moved in an arrow e direction (rearward and then slant downward) of FIG. **13**, and the steering shaft **14** is pulled rearward and bent with a bending point of the universal joints **19** and **21** as the joint as illustrated in FIG. **13**.

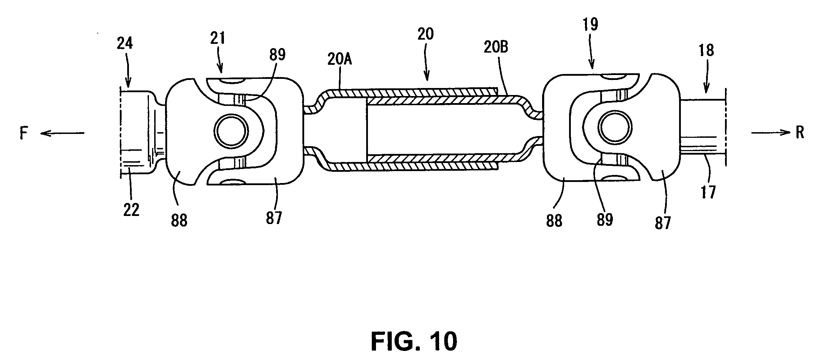

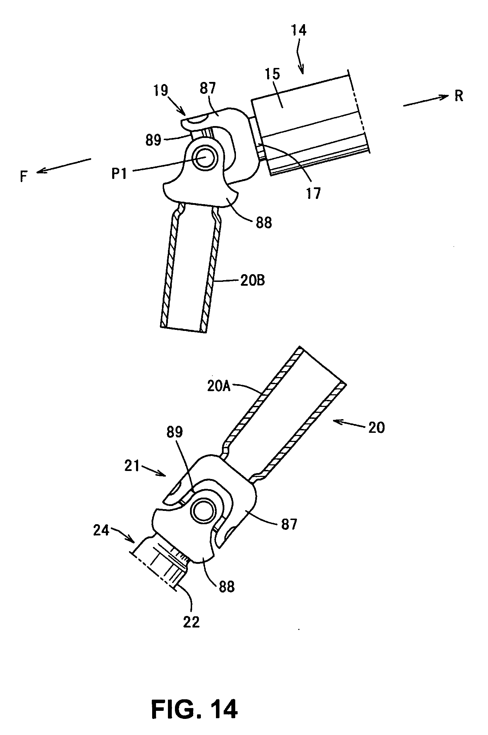

The above-described second steering shaft **20** comprises a plurality of outer shaft **20A** and inner shaft **20B** as illustrated in FIG. **10**, and conveys a steering force (rotational force) by the steering wheel **27** to the third steering shaft **24** via the universal joint **19**, inner shaft **20B**, outer shaft **20A** and universal joint **21**. When the vehicle frontal crash or the like occur, the outer shaft **20A** and the inner shaft **20B** are moved relatively in the axial direction as illustrated in FIG. **13**, and after these both shafts **20A** and **20B** have expanded, these shafts **20A** and **20B** are separated or can separate as illustrated in FIG. **14**. Namely, the outer and inner shafts **20A** and **20B** of the second steering shaft **20** form at least part of the expanding portion which is expandable at least in the axial direction during the vehicle frontal crash or the like.

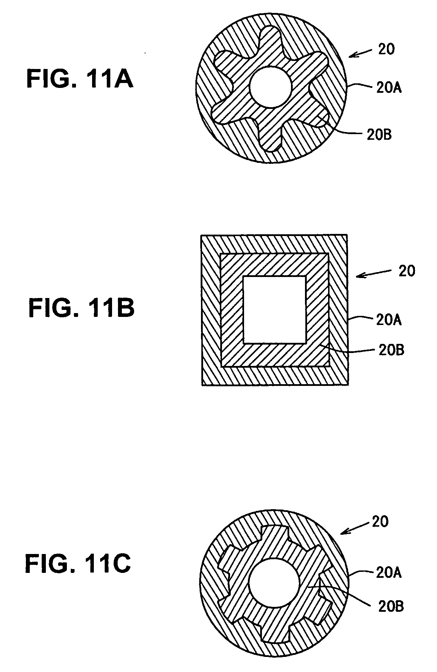

A specific sectional structure to allow the second steering shaft **20** to convey the rotational force (steering force by the steering wheel **27**) and to provide the relative movement in the axial direction is illustrated in FIGS. **11A, 11B** and **11C.** In a structure illustrated in FIG. **11A,** the inner shaft **20B** includes a plurality of projections which extend radially at specified (predetermined or predeterminable) intervals (e.g. of about 60 degrees) and the outer shaft **20A** includes a plurality of recesses substantially corresponding the projections. In a structure illustrated in FIG. **11B**, the outer shaft **20A** and the inner shaft **20B** are substantially formed in a square or rectangular or polygonal shape, respectively. In a structure in FIG. **11C**, the inner shaft **20B** is formed in a spline-shaft shape and the outer shaft **20A** is formed includes spline-shaped recesses. In these structures in FIGS. **11A**, **11B** and **11C**, the both shafts **20A** and **20B** are configured so as to slide or displace relatively (preferably in a telescopic manner), and thus by using either one of these structures, there can be provided the structure of these shafts **20A** and **20B** in which the rotational force can be conveyed and the relative movement in the axial direction can be obtained.

Herein, the universal joints **19** and **21** illustrated in **FIG. 10** comprise yoke members **87** and **88** and a cross member **89** (so-called joint cross) which connects the yoke members **87** and **88**. Also, an arrow **F** denotes a frontward direction of the vehicle and an arrow **R** denotes a rearward direction of the vehicle in FIG. **10**.

An operation of the steering support structure described above will be described. As illustrated in FIGS. **3** and **4**, the steering column **15** of the steering shaft **14** can be adjusted in the telescopic direction (the direction denoted by the arrow **b** in FIG. **3)** along the longitudinally extending long holes **32** and **34**. Also, it can be adjusted in the tilt direction (the direction denoted by the arrow **a** in FIG. **3)** along the vertically extending long holes **36** and **36**. Herein, since the meter portion **50** preferably is connected with the steering column **15**, it moves along with the steering column **15**. As a result, the proper visibility of meter can be obtained.

Also, since the steering force of the steering wheel **27** is conveyed to the right and left wheels via the first steering shaft **18**, second steering shaft **20**, third steering shaft **24** and steering device **26**, the front wheel can be steered.

Further, the dash panel **6** and the pedal support bracket **70** are moved rearward from the normal state of FIG. **2** to the state of FIG. **13** during the vehicle frontal crash or the like. Herein, the axis member **84** of the pedal support bracket **70** is guided under faces of the guide pieces **85a** and **85a** of the pedal control bracket **85**. Thus, the peal support bracket **70** is bent as illustrated in FIG. **13** and the brake pedal **71** can be prevented from jumping up toward the foot of the passenger **A**. Also, the hook member **82** attached to the pedal support bracket **70** moves in the direction denoted by the arrow **e** of FIG. **8** (rearward by a specified (predetermined or predeterminable) distance and then straightly slant rearward), and the steering shaft **14** is pulled rearward and bent or pivoted with the bending point of the universal joints **19** and **21** as the joint as illustrated in FIG. **13**. Herein, the outer shaft **20A** and the inner shaft **20B**, as the expanding portion, move relatively in the axial direction, and then after these shafts have expanded, they are possibly separated as illustrated in FIG. **14.** Thus, the position **P1** (see FIG. **14**) of the cross member **87** at the universal joint **19** is maintained at a substantially constant position regardless of before or after the vehicle crash. As a result, the steering shaft **14**, specifically the first steering shaft **18** can be prevented from moving toward the passenger **A** properly, and the safety of the passenger **A** can be ensured.

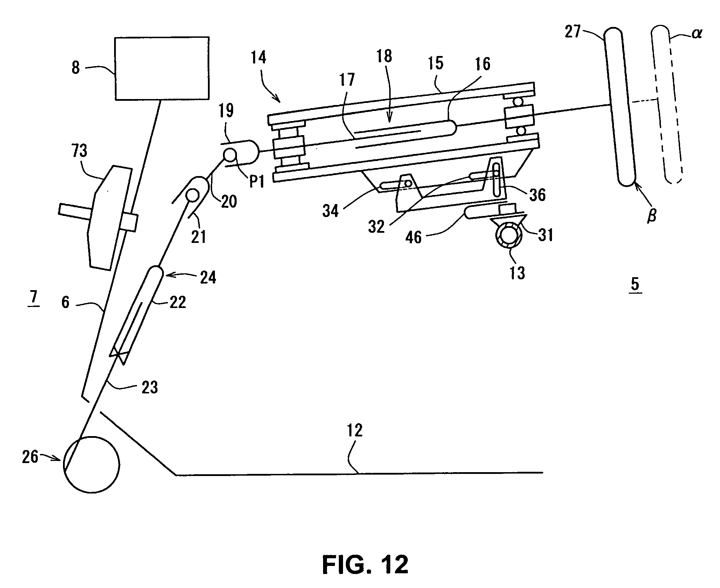

Also, when the passenger **A** is moved forward after the expansion of an air bag (not illustrated) installed at the steering wheel **27**, the substantially U-shaped plates **46** extend forward and the steering column **15** is moved forward by a specified distance along the long holes **32** and **34**, as illustrated in FIG. **12**. Further, the outer shaft **16** and the inner shaft **17** of the first steering shaft **18** are moved in the axial direction relatively so as to be shortened, and the steering wheel **27** is moved from a position α illustrated by a two-dotted broken line to a position β illustrated by a solid line in FIGS. **12** and **13** (2nd collapsible movement). Herein, the position **P1** of the cross member **87** (see FIG. **10**) of the universal joint **19** illustrated in FIGS. **3** and **12** is maintained at the substantially constant position regardless of before or after the vehicle crash.

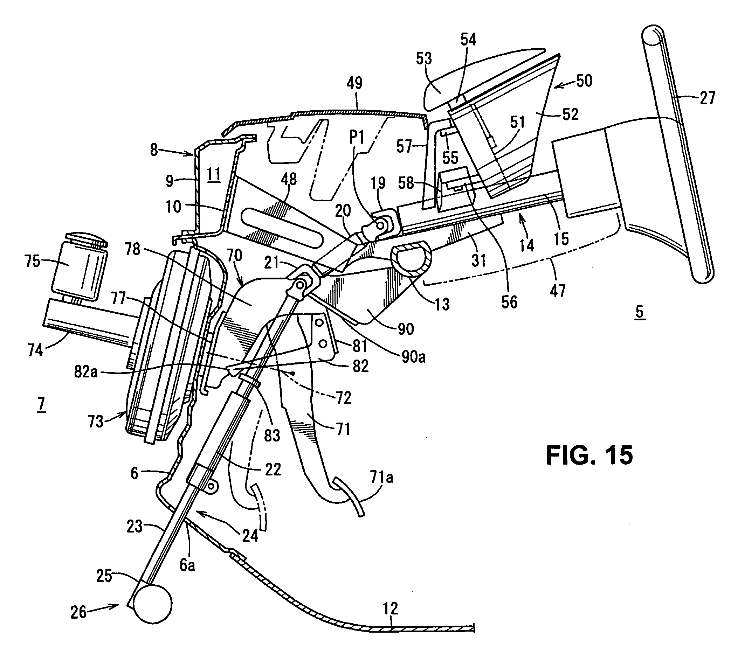

FIG. **15** illustrates another embodiment of the steering support structure of the vehicle. In the previous embodiment illustrated in FIG. **2**, two brackets of the pedal control bracket **85** and the backup bracket **86** are provided at the rear portion of the pedal support bracket **70** and these brackets **85** and **86** are configured so as not to change their positions. In the present embodiment of FIG. **15**, meanwhile, there is provided a pedal control bracket **90** as a rigidity member which is formed integrally or unitarily with these brackets **85** and **86**, and a rear end portion of the pedal control bracket **90** is fixed (preferably welded) to the steering support member **13**. Thus, the bracket **90** is configured so as not to change its position. Also, guide pieces **90a** and **85a** which slant rearward and downward are formed integrally or unitarily with lower ends of the pedal control bracket **90** like the structure illustrated in FIGS. **9**, and these guide pieces **90a** guide the axis member **84** (see previous figures). The structure of this embodiment performs substantially the same operation and effects as the one of the previous embodiment. Accordingly, the similar or same portions/parts as those of FIG. **2** are denoted by the same reference numerals, and their detailed explanations are omitted herein.

As described above, according to the present embodiment, there is provided the steering support structure of the vehicle, comprising the dash panel **6** provided at the front portion in the cabin or passenger compartment **5** where the driver seat **1** for the passenger **A** is provided, the steering support member **13** provided behind the dash panel **6** and extending substantially in the vehicle width direction, the steering shaft **14** supported by the steering support member **13**, the steering device **26** coupled to the front end portion of the steering shaft **14**, the steering wheel **27** attached to the rear end portion of the steering shaft **14**, wherein the steering wheel **27** is provided so as to substantially face the shoulder portion of the passenger **A** on the driver seat **1**, and the steering shaft **14** is provided above the steering support member **13** and attached to the steering support member **13**.

According to this structure, since the steering wheel **27** is provided so as to substantially face the shoulder portion of the passenger **A**, the difference between the distance from the driver's hand located at the upper portion of the steering wheel **27** to the driver's shoulder portion and the distance from the driver's hand located at the lower portion of the steering wheel **27** to the driver's shoulder portion becomes extremely small. As a result, the handling of the steering wheel **27** can be improved, the sense of fatigue of the passenger **A** can be reduced, and the steering wheel **27** can be properly adjusted substantially in the longitudinal direction of the vehicle in particular according to the body size of the passenger **A**. Namely, the proper disposition of the steering wheel **27** with the reduced sense of fatigue can be attained.

Also, the steering shaft **14** is configured such that its position is adjustable, and there is provided the meter portion **50** which preferably moves along with the steering shaft 14 and its position is adjustable. The position of the steering shaft **14** can be adjusted in both tilt and telescopic directions.

According to this structure, since the steering shaft **14** and the meter portion **50** preferably move together, the both proper disposition of the steering wheel **27** and proper visibility of the meter can be obtained.

Further, there is provided the steering attaching bracket **30** to attach the steering shaft **14** to the steering support member **13**, and the steering shaft **14** is fixed to the steering support member **13** by fastening the steering attaching bracket **30** preferably substantially from below.

According to this structure, since the steering shaft **14** is or is to be fixed to the steering support member **13** by fastening the steering attaching bracket **30** from below, the service of the steering shaft **14** can be facilitated.

Additionally, there is provided the instrument panel **49** above the steering shaft **14**, and the instrument panel **49** is configured such that a part thereof (see the meter portion **50**) is detachable, and the steering shaft **14** can be detached by detaching the part of the instrument panel **49** (see the meter portion **50**) thereby.

According to this structure, all of the instrument panel **49** does not need to be detached, and by detaching only part (the meter portion **50**), the steering shaft **14** can be removed. Accordingly, the maintenance and service can be facilitated.

Also, the part of the instrument panel **49** is provided at the meter portion **50**.

According to this structure, all of the instrument panel **49** does not need to be detached, and by detaching only the meter portion **50**, the steering shaft **14** can be removed. Accordingly, the maintenance and service can be facilitated. Also, this detachable structure of the meter portion **50** can simplify a structure around the instrument panel. Further, since there is provided no unnecessary slit structure, an appearance will not deteriorate.

Further, the meter portion **50** comprises the meter body **51** and the meter hood **53** which are integrally or unitarily attached.

According to this structure, since the meter body **51** and the meter hood **53** are integrally attached or detached, the maintenance and service can be further facilitated.

Further, there is further provided the hook member **82** as the operating member which pulls the intermediate portion (see preferably the third steering shaft **24**) of the steering shaft **14** rearward during a vehicle frontal crash.

According to this structure, since the hook member **82** pulls the intermediate portion of the steering shaft **14** rearward during the vehicle frontal crash as illustrated in FIG. **13**, the safety of the passenger **A** can be ensured by the control of the steering shaft **14**.

Namely, both the proper disposition of the steering wheel **27**, which provides the steering wheel **27** with the proper longitudinal adjustment and the reduced sense of fatigue and the safety of the passenger by the control of the steering shaft **14** can be obtained.

Also, the steering shaft **14**, as illustrated in FIGS. **2** and **3**, comprises a plurality of shafts **18**, **20** and **24** which are coupled via the joint portion (see preferably the universal joints **19** and **21**), the operating member (see preferably the hook member **82**) pulls or acts on the steering shaft **14** (see particularly the third steering shaft **24**) such that the steering shaft **14** is bent rearward during the vehicle frontal crash.

According to this structure, when the steering shaft **14** is pulled rearward or engaged by the operating member (see preferably the hook member **82**) during the vehicle frontal crash, the pull is carried out by making use of the joint portion (see the universal joints **19** and **21**). Thus, the safety by the control of the steering shaft **14** can be ensured further properly.

Also, the operating member (see preferably the hook member **82**) is attached at the dash lower panel **6** which is moved rearward during the vehicle frontal crash (the hook **82** is attached at the dash lower panel **6** via the pedal support bracket **70** in the present embodiment).

According to this structure, since the operating member (see preferably the hook member **82**) is attached at the dash lower panel **6** which is moved substantially rearward first during the vehicle frontal crash, the steering shaft **14** can be pulled substantially rearward at the appropriate timing.

Further, the operating member (see preferably the hook member **82**) is or is to be attached to the pedal support bracket **70** which is attached at the dash lower panel **6** to support the brake pedal **71** and is moved substantially rearward and then substantially slant downward during vehicle frontal crash.

This pedal support bracket **70** is configured so as to be a structure to substantially prevent the brake pedal **71** from being moved rearward. According to this structure, since the pedal support bracket **70**, which is moved rearward and then slant downward during vehicle frontal crash, is utilized, the steering shaft **14** can be pulled rearward surely without interfering with any other member when the operating member (see preferably the hook member **82**) pulls the steering shaft **14**. Also, this structure can be made simple.

Also, there is further provided the engaging member (see preferably the engaging ring **83**) which prevents the operating member (see preferably the hook member **82**) from sliding at the portion of the steering shaft (see preferably the third steering shaft **24**) which corresponds to the operating member.

According to this structure, since the operating member (see preferably the hook member **82**) is prevented from sliding or displacing by the engaging member (see preferably the engaging ring **83**), the pull of the steering shaft (see preferably the third steering shaft **24**) by the operating member (see preferably the hook member **82**) can be attained further surely.

Further, there is further provided the expanding portion (see preferably the outer shaft **20A** and the inner shaft **20B**) which is expandable in the axial direction during the vehicle frontal crash at the intermediate portion (see preferably the second steering shaft **20**) of the steering shaft **14**.

According to this structure, the expanding portion (see preferably the outer shaft **20A** and the inner shaft **20B**) provided at the intermediate portion (see preferably the second steering shaft **20**) of the steering shaft **14** expands in the axial direction during the vehicle frontal crash (see FIG. **13**). Accordingly, the steering wheel **27** can be prevented from moving toward the passenger **A**, and thus the safety by the control of the steering shaft **14** can be ensured.

Also, the intermediate portion (see preferably the second steering shaft **20**) of the steering shaft comprises a plurality of shafts **20A** and **20B** which are connected with the overlap. These shafts **20A** and **20B** can covey the steering force by the steering wheel **27** and move relatively in the axial direction.

According to this structure, the expanding portion which is expandable at least in the axial direction during the vehicle frontal crash can be made simple.

Also, this expanding portion (see preferably the outer shaft **20A** and the inner shaft **20B**) is configured so as to be separated or separatable after its expansion (see FIG. **14**).

According to this structure, since the expanding portion (see preferably the outer shaft **20A** and the inner shaft **20B**) preferably is separated after its expansion, the control of the steering shaft **14** can be attained further surely, and the safety of the passenger **A** can be ensured further properly.

Additionally, there is further provided the hook member **82** to promote the expansion (see FIG. **13**) and separation (see FIG. **14**) of the expanding portion (see preferably the outer shaft **20A** and the inner shaft **20B**) by pulling the intermediate portion of the steering shaft **14** rearward during the vehicle frontal crash.

According to this structure, since the expansion and separation of the expanding portion (see preferably the outer shaft **20A** and the inner shaft **20B**) is promoted by the hook member **82**, the expansion and separation cane be attained surely.

Also, the hook member **82** is or is to be attached at the dash lower panel **6** which is moved rearward during the vehicle frontal crash. In the present embodiment, the hook member **82** is or is to be attached at the dash lower panel **6** via the pedal support bracket **70**.

According to this structure, since the hook member **82** is attached at the dash lower panel **6** which is moved rearward first during the vehicle frontal crash, the intermediate portion of the steering shaft **14** can be moved rearward at the appropriate timing.

Further, the hook member **82** is or is to be attached to the pedal support bracket **70** which is attached at the dash lower panel **6** to support the brake pedal **71** and is moved rearward and then slant downward during vehicle frontal crash. This pedal support bracket **70** is configured so as to be the structure which prevents the brake pedal **71** from being moved rearward.

According to this structure, since the pedal support bracket **70**, which is moved substantially rearward and then substantially slant downward during vehicle frontal crash, is utilized, the intermediate portion of the steering shaft **14** can be pulled rearward surely without interfering with any other member when the operating member (see preferably the hook member **82**) pulls the intermediate portion of the steering shaft **14**. Also, this structure can be made simple.

The present invention should not limited to the above-described embodiments, but any other modifications and improvements may be applied within the scope of the present invention as defined in the claims.

## Claims

1. A steering support structure for a vehicle, comprising
a steering support member (**13**) to be provided behind a dash panel (**6**) and extending substantially in a vehicle width direction;
a steering shaft (**14**) supported by said steering support member (**13**);
a steering device (**26**) coupled to a front end portion of said steering shaft (**14**);
a steering wheel (**27**) attached to a rear end portion of said steering shaft (**14**),
wherein said steering wheel (**27**) is provided so as to substantially face a shoulder portion of the passenger (**A**) on the seat (**1**), and said steering shaft (**14**) is provided above said steering support member (**13**) and attached to said steering support member (**13**).

2. A steering support structure for a vehicle of claim 1, wherein said steering shaft (**14**) is configured such that a position thereof is adjustable, and there is provided a meter portion (**50**) which moves along with the steering shaft (**14**) and whose position is adjustable.

3. A steering support structure for a vehicle of claim 1 or 2, wherein there is provided a steering attaching bracket (**30**) to attach said steering shaft (**14**) to said steering support member (**13**), and said steering shaft (**14**) is fixed to said steering support member (**13**) by fastening said steering attaching bracket (**30**) preferably substantially from below.

4. A steering support structure for a vehicle of one of the preceding claims, wherein there is provided an instrument panel (**49**) above the steering shaft (**14**), and said instrument panel (**49**) is configured such that a part thereof is detachable, whereby said steering shaft (**14**) can be detached by detaching the part of the instrument panel (**49**).

5. A steering support structure for a vehicle of claim 4 in combination with claim 2, wherein said part of the instrument panel (**49**) is provided at said meter portion (**50**).

6. A steering support structure of a vehicle of one of the preceding claims in combination with claim 2, wherein said meter portion (**50**) comprises a meter body (**51**) and a meter hood (**53**) which are integrally attached.

7. A steering support structure for a vehicle of one of the preceding claims, wherein there is further provided an operating member (**82**) which pulls or engages an intermediate portion of said steering shaft (**14**) rearward during a vehicle frontal crash.

8. A steering support structure for a vehicle of claim 7, wherein said steering shaft (**14**) comprises a plurality of shafts (**18, 20, 24**) which are coupled via a joint portion (**19, 21**), said operating member (**82**) pulls or engages said steering shaft (**14**) such that said steering shaft (**14**) is bent rearward during the vehicle frontal crash.

9. A steering support structure for a vehicle of claim 7 or 8, wherein said operating member (**82**) is to be attached at said dash panel (**6**) which is moved rearward during the vehicle frontal crash.

10. A steering support structure for a vehicle of claim 7, 8 or 9, wherein said operating member (**82**) is to be attached to a pedal attaching bracket (**70**) which is attached at said dash panel (**6**) to support a pedal (**71**) and is moved rearward and then slant downward during vehicle frontal crash.

11. A steering support structure for a vehicle of any one of claims 8 through 10, wherein there is further provided an engaging member (**83**) which prevents said operating member (**82**) from sliding at a portion (**24**) of said steering shaft (**14**) which corresponds to said operating member (**82**).

12. A steering support structure for a vehicle of one of the preceding claims, wherein there is further provided an expanding portion (**20A, 20B**) which is expandable in an axial direction during a vehicle frontal crash at an intermediate portion (**20**) of said steering shaft (**14**).

13. A steering support structure for a vehicle of claim 12, wherein said intermediate portion (**20**) of the steering shaft (**14**) comprises a plurality of shafts (**20A, 20B**) which are connected with an overlap.

14. A steering support structure for a vehicle of claim 12 or 13, wherein said expanding portion (**20A, 20B**) is configured so as to be separated after an expansion thereof.

15. A steering support structure for a vehicle of any one of claims 12 through 14, wherein there is further provided an operating member (**82**) to promote an expansion and separation of said expanding portion (**20A, 20B**) by pulling or engaging said intermediate portion of the steering shaft (**14**) rearward during the vehicle frontal crash.

16. A steering support structure for a vehicle of claim 15, wherein said operating member (**82**) is to be attached at said dash panel (**6**) which is moved rearward during the vehicle frontal crash.

17. A steering support structure for a vehicle of claim 15 or 16, wherein said operating member (**82**) is to be attached to a pedal attaching bracket (**70**) which is attached at said dash panel (**6**) to support a pedal (**71**) and is moved substantially rearward and then substantially slant downward during vehicle frontal crash.

18. A vehicle provided with a steering support according to one of the preceding claims.
